# EUROPÄISCHE PATENTANMELDUNG

(11) **EP 2 153 722 A1**
(43) Veröffentlichungstag der Anmeldung: **17.02.2010**
(21) Anmeldenummer: 08161821.7
(22) Anmeldetag: 05.08.2008
(51) Int. Cl.: A01N 47/12, A01N 43/80, A01N 25/02, A01P 3/00

(54) **Antifungische Flüssigformulierungen enthaltend 3-Iodpropargylbutylcarbamat (IPBC) und N-octylisothiazolinon (NOIT)**

(71) Anmelder: LANXESS Deutschland GmbH, 51369 Leverkusen (DE)
(72) Erfinder: Uhr, Hermann, Dr., 51373 Leverkusen (DE); Gerharz ,Tanja, Dr., 40599 Düsseldorf (DE); Sauer, Frank, Dr., 40764 Langenfeld (DE)

(57) **Zusammenfassung**

Die vorliegende Erfindung betrifft stabile, antifungische Flüssigformulierungen für den Materialschutz enthaltend 3-Iodpropargylbutycarbamat (IPBC), n-Octylisothiazolinon (NOIT) und ein Lösungsmittel das, bezogen auf Standarddruck einen Siedepunkt von 250°C oder mehr aufweist und zumindest zwei funktionelle Gruppen enthält, die ausgewählt sind aus Ether-, Ester- oder Amid- oder alkoholgruppen.

## Beschreibung

Die vorliegende Erfindung betrifft stabile, antifungische Flüssigformulierungen für den Materialschutz enthaltend 3-Iodpropargylbutylcarbamat (IPBC) und n-Octylisothiazolinon (NOIT).

Formulierungen enthaltend IPBC und NOIT sind prinzipiell bekannt. So offenbart beispielsweise CA 2053807 synergistische Mischungen aus IPBC und NOIT zur Kontrolle des Wachstums von *Klebsiella pneumoniae* insbesondere in offenen Kühlsystemen sowie bei der Papierherstellung.

Aus JP 06016506 sind xylol- sowie wasserhaltige Mittel enthaltend IPBC und NOIT bekannt, die sich zum Schutz von Holz, Papier, Textilien, Klebstoffe und Farben vor Befall durch Schimmel eignen.

JP 2003104801 beschreibt stabile Mittel enthaltend Halogenacetylenderivate, Isothiazolinone und Epoxyverbindungen.

Aus WO 2002/015693 sind synergistische Mischungen aus Pyrithionsalzen und 2-Alkylisothiazolinonen bekannt, die weiterhin auch IPBC enthalten können.

Nachteilig an den vorgenannten Mischungen und Mitteln ist, dass sie entweder nicht VOC-frei sind und/oder eine mangelnde Lagerstabilität aufweisen.

In WO 03/049543 werden VOC-freie oder -reduzierte stabile Flüssigformulierungen beschrieben, die den Wirkstoff IPBC gelöst in Polyethylenglycol, Polypropylenglycol oder Polypropylenglycolglycerinester enthalten.

Im Wesentlichen VOC-freie Formulierungen enthaltend NOIT und IPBC sind üblicherweise schwer zu stabilisieren, da IPBC in Gegenwart von Wärme oder Licht zersetzt wird. Als Folge davon verfärben sich solche Formulierungen und sind damit für viele Anwendungen nicht mehr geeignet.

Eine Möglichkeit VOC-freie Formulierungen zu erhalten, besteht darin die Wirkstoffe als wässrige Dispersionen ohne zusätzliche Lösungsmittel zu formulieren. Während IPBC und NOIT sich jeweils für sich in stabile Dispersionen oder Emulsionen formulieren lassen, können stabile Dispersionen, die beide Wirkstoffe enthalten, nicht erhalten werden. In Gegenwart beider Wirkstoffe kommt es zu starker Heteroflocculation, was zur Folge hat, dass sich nach kurzer Zeit Agglomerate bilden und die Formulierung stark sedimentiert bzw. NOIT ausölt.

Im Wesentlichen VOC-freie, stabile Flüssigformulierungen von NOIT und IPBC sind bislang nicht bekannt.

Es bestand daher das Bedürfnis im Wesentlichen VOC-freie, stabile Flüssigformulierungen von NOIT und IPBC bereitzustellen.

Es wurden nun flüssige Mittel gefunden, enthaltend zumindest
- 3-Iodpropargylbutylcarbamat (IPBC)
- n-Octylisothiazolinon (NOIT)
- ein Lösungsmittel das, bezogen auf Standarddruck (1013,25 hPa), einen Siedepunkt von 250°C oder mehr aufweist und zumindest zwei funktionelle Gruppen enthält, die ausgewählt sind aus Ether-, Ester- oder Amid- oder Alkoholgruppen,
wobei die flüssigen Mittel im Wesentlichen frei sind von Lösungsmitteln die, bezogen auf Standarddruck, einen Siedepunkt von weniger als 250°C aufweisen.

Es sei an dieser Stelle angemerkt, dass der Rahmen der Erfindung alle beliebigen und möglichen Kombinationen der oben stehenden und im Folgenden aufgeführten, allgemeinen oder in Vorzugsbereichen genannten Komponenten, Wertebereiche, bzw. Verfahrensparameter umfasst.

Der Begriff "flüssiges Mittel" bedeutet im Rahmen der Erfindung, dass das Mittel bei Raumtemperatur im flüssigen Aggregatzustand vorliegt und der Gehalt an festen Bestandteilen 0 bis 1 Gew.-%, bevorzugt 0 bis 0,5 Gew.-% beträgt. Besonders bevorzugt sind die flüssigen Mittel frei von festen Bestandteilen.

Im Wesentlichen frei von Lösungsmitteln die, bezogen auf Standarddruck, einen Siedepunkt weniger als 250°C aufweisen, bedeutet einen Gewichtsanteil solcher Lösungsmittel in der Formulierung von 0 bis 3 Gew.-% vorzugsweise 0 bis 1 Gew.-% und besonders bevorzugt 0 bis 0,5 Gew.-%.

Beispielsweise enthalten die erfindungsgemäßen flüssigen Mittel IPBC und NOIT in einem Gewichtsverhältnis von 90:1 bis 1:90, bevorzugt 8:2 bis 2:8 und ganz besonders bevorzugt 7:3 bis 3:7.

Die Summe der Wirkstoffgehalte von IPBC und NOIT in den erfindungsgemäßen flüssigen Mitteln kann in einem breiten Bereich variiert werden und ist nach oben nur von der maximalen Löslichkeit der Wirkstoffe im gewählten Lösungsmittel begrenzt. Im Allgemeinen können in der Formulierung beispielsweise 2 bis 90 Gew.-% an IPBC und NOIT bezogen auf die Summe ihrer Gewichtsanteile enthalten sein, bevorzugt 5 bis 85 Gew. %, ganz besonders bevorzugt 30 bis 80 Gew. % und noch weiter bevorzugt 50 bis 60 Gew.-%.

Die erfindungsgemäßen flüssigen Mittel enthalten weiterhin zumindest ein Lösungsmittel das, bezogen auf Standarddruck (1013,25 hPa), einen Siedepunkt von 250°C oder mehr aufweist und zumindest zwei funktionelle Gruppen enthält, die ausgewählt sind aus Ether-, Ester- oder Amid- oder Alkoholgruppen.

Solche Lösungsmittel sind bevorzugt Polyetheralkohole, wie beispielsweise Polyethylenglycole und Polypropylenglycole sowie Dialkyldiester wie Dialkyladipate, Dialkylsuccinate und Dialkylglutarate.

Besonders bevorzugte Lösungsmittel sind Polyethylenglycole sowie Dialkyladipate, Dialkylsuccinate und Dialkylglutarate sowie Mischungen der vorgenannten Lösungsmittel.

Polyethylenglycole sind vorzugsweise solche die mindestens 3 Ethylenglycoleinheiten besitzen. Bevorzugte Polyethylenglycole besitzen 3 bis 14, bevorzugt 3 bis 12 und besonders bevorzugt 3 bis 10 Polyethylenglycoleinheiten. Ganz besonders bevorzugt sind Triethylenglycol, Tetraethylenglycol, Polyethylenglycol 200, Polyethylenglycol 300, Polyethylenglycol 400, Polyethylenglycol 500 und Polyethylenglycol 600. Hierbei kann es sich um die reinen Verbindungen oder um deren Mischungen handeln Die genannten Polyethylenglycole und ihre Mischungen sind kommerziell erhältlich.

Dialkylglutarate, -succinate und -adipate können beispielsweise einzeln bevorzugt jedoch als Gemisch eingesetzt werden, wie es im technischen Herstellprozess anfallen. Bevorzugt werden solche Ester eingesetzt, in denen der Alkylrest geradkettig oder verzweigt ist und zwischen drei und zehn Kohlenstoffatomen aufweist. Besonders bevorzugt handelt es sich um die Propyl-, n-Butyl-, Isobutyl, s-Butyl, n-Pentyl, n-Hexyl, n-Heptyl, n-Octyl, 2-Ethylheyl-diester oder Mischungen davon, ganz besonders bevorzugt um Mischungen der Diisobutyldiester.

Die Menge an solchen Lösungsmitteln kann in einem breiten Bereich variieren. Im Allgemeinen werden in den Formulierungen 5 bis 90 Gew. %, bevorzugt 5 bis 48 Gew.% und ganz besonders bevorzugt 40 bis 48 Gew. % Lösungsmittel eingesetzt.

Die erfindungsgemäßen Mittel können weiterhin gegebenenfalls zumindest einen Emulgator enthalten. Geeignete Emulgatoren sind beispielsweise nicht-ionische und anionischen Emulgatoren.

Beispielhaft seien als geeignete Emulgatoren genannt: Polyoxyethylen- oder Polyoxypropylen-Fettsäureester, Polyoxyethylen- oder Polyoxypropylen-Fettalkoholether, Alkylphenylethoxylate oder - propoxylate Trisarylphenylethoxylate oder -propoxylate, Polyvinylpyrrolidone, Polyacrylate, Alkylpolyglycoside, Fettaminethoxylate, Fettsäureamidethoxylate, Alkylpolyalkylenglycol-Mischpolymerisate, Blockcopolymere aus Polyoxypropylen- und Polyoxyethyleneinheiten, die gegebenenfalls mit Alkoholen, Alkylphenylgruppen oder Trisarylphenylresten verethert oder mit Fettsäuren verestert sind, oder Tenside der oben genannten Typen, die zusätzlich noch Sulfonat oder Phosphatreste tragen, sowie weiterhin Alkylsulfonate, Alkylsulfate, Arylsulfonate.

Bevorzugt handelt es sich bei den Emulgatoren um nicht-ionogene Emulgatoren wie Polyoxyethylen-Fettsäureester, Polyoxyethylen-Fettalkoholether, Alkylphenylethoxylate, Trisarylphenylethoxylate, Polyvinylpyrrolidone, Polyacrylate, Blockcopolymere aus Polyoxypropylen- und Polyoxyethyleneinheiten, die gegebenenfalls mit Alkoholen, Alkylphenylgruppen oder Trisarylphenylresten verethert oder mit Fettsäuren verestert sind oder Mischungen aus den oben genannten Emulgatoren.

Die erfindungsgemäßen, flüssigen Mittel enthalten vorzugsweise 0,001 bis 10 Gew. %, bevorzugt 1 bis 8 Gew. % und ganz besonders bevorzugt bis 1 bis 6 Gew. % an Emulgatoren.

Die erfindungsgemäßen flüssigen Mittel können gegebenenfalls auch noch weitere Wirkstoffe wie beispielsweise Fungizide, Bakterizide, Algizide und/oder Insektizide enthalten.

Als gegebenenfalls zusätzlich enthaltene Fungizide, Bakterizide, Algizide und/oder Insektizide können beispielsweise eingesetzt werden:
Triazole wie Azaconazol, Azocyclotin, Bitertanol, Bromuconazol, Cyproconazol, Diclobutrazol, Difenoconazol, Diniconazol, Epoxyconazol, Etaconazol, Fenbuconazol, Fenchlorazol, Fenethanil, Fluquinconazol, Flusilazol, Flutriafol, Furconazol, Hexaconazol, Imibenconazol, Ipconazol, Isozofos, Myclobutanil, Metconazol, Paclobutrazol, Penconazol, Propioconazol, Prothioconazol, Simeoconazol, (±)-cis-1-(4-chlorphenyl)-2-(1H-1,2,4-triazol-1-yl)-cycloheptanol, 2-(1-tert-Butyl)-1-(2-chlorphenyl)-3-(1,2,4-triazol-1-yl)-propan-2-ol, Tebuconazol, Tetraconazol, Triadimefon, Triadimenol, Triapenthenol, Triflumizol, Triticonazol, Uniconazol sowie deren Metallsalze und Säureaddukte;
Imidazole wie Clotrimazol, Bifonazol, Climbazol, Econazol, Fenapamil, Imazalil, Isoconazol, Ketoconazol, Lombazol, Miconazol, Pefurazoat, Prochloraz, Triflumizol, Thiazolcar 1-Imidazolyl-1-(4'-chlorophenoxy)-3,3-dimethylbutan-2-on sowie deren Metallsalze und Säureaddukte;
Pyridine und Pyrimidine wie Ancymidol, Buthiobat, Fenarimol, Mepanipyrin, Nuarimol, Pyroxyfur, Triamirol;
Succinat-Dehydrogenase Inhibitoren wie Benodanil, Carboxim, Carboximsulfoxid, Cyclafluramid, Fenfuram, Flutanil, Furcarbanil, Furmecyclox, Mebenil, Mepronil, Methfuroxam, Metsulfovax, Nicobifen, Pyrocarbolid, Oxycarboxin, Shirlan, Seedvax;
Naphthalin-Derivate wie Terbinafin, Naftifin, Butenafin, 3-Chloro-7-(2-aza-2,7,7-trimethyl-oct-3-en-5-in);
Sulfenamide wie Dichlorfluanid, Tolylfluanid, Folpet, Fluorfolpet; Captan, Captofol;
Benzimidazole wie Carbendazim, Benomyl, Fuberidazole, Thiabendazol oder deren Salze;
Morpholinderivate wie Aldimorph, Dimethomorph, Dodemorph, Falimorph, Fenpropidin, Fenpropimorph, Tridemorph, Trimorphamid und ihre arylsulfonsauren Salze, wie z.B. p-Toluolsulfonsäure und p-Dodecylphenylsulfonsäure;
Benzthiazole wie: 2-Mercaptobenzothiazol;
Benzthiophendioxide wie:Benzo[b]thiophen-S,S-dioxid-carbonsäurecyclohexylamid;
Benzamide wie: 2,6-Dichloro-N-(4-trifluoromethylbenzyl)-benzamid, Tecloftalam;
Borverbindungen wie: Borsäure, Borsäureester, Borax;
Formaldehyd und formaldehydabspaltende Verbindungen wie Benzylalkoholmono-(poly)-hemiformal, 1,3-Bis(hydroxymethyl)-5,5-dimethy-limidazolidine-2,4-dione (DMDMH), Bisoxazolidine, n-Butanol-hemiformal, Cis 1-(3-Chlorallyl)-3,5,7-triaza-1-azoniaadamantane chlorid, 1-[1,3-Bis(hydroxymethyl-2,5-dioxoimidazolidin-4-yl]-1,3-bis(hydroxymethyl)urea, Dazomet, Dimethylol-harnstoff, 4,4-Dimethyl-oxazolidine, Ethylenglycol-hemiformal, 7-Ethylbicyclooxazolidine, Hexa-hydro-S-triazine, Hexamethylentetramin, N-Hydroxymethyl-N'-methylthioharnstoff, Methylenbis-morpholin, Natrium N-(Hydroxy-methyl)glycinat, N-Methylolchloracetamid, Oxazolidine, Paraformaldehyd, Taurolin, Tetrahydro-1,3-oxazin, N-(2-Hydroxypropyl)-amin-methanol, Tetramethylol-acetylen-diharnstoff (TMAD);
Isothiazolinone wie N-Methylisothiazolin-3-on, 5-Chlor-N-methylisothiazolin-3-on, 4,5-Trimethylenisothiazolinon, 4,5-Benzisothiazolinon;
Aldehyde wie Zimtaldehyd, Formaldehyd, Glutardialdehyd, β-Bromzimtaldehyd, o-Phthaldialdehyd;
Thiocyanate wie: Thiocyanatomethylthiobenzothiazol, Methylenbisthiocyanat;
Quartäre Ammoniumverbindungen und Guanidine wie Benzalkoniumchlorid, Benzyldimethyltetradecylammoniumchlorid, Benzyldimethyldodecylammoniumchlorid, Dichlorbenzyldimethylalkylammoniumchlorid, Didecyldimethylammoniumchlorid, Dioctyldimethylammoniumchlorid, N-Hexadecyltrimethylammoniumchlorid, 1-Hexadecylpyridiniumchlorid, Iminoctadine-tris(albesilat);
Iodderivate wie Diiodmethyl-p-tolylsulfon, 3-Iod-2-propinyl-alkohol, 4-Chlorphenyl-3-iodpropargyl-formal, 3-Brom-2,3-diiod-2-propenylethylcarbamat, 2,3,3-Triiodallylalkohol, 3-Brom-2,3-diiod-2-propenylalkohol, 3-Iod-2-propinyl-n-hexylcarbamat, 3-Iod-2-propinyl-cyclohexylcarbamat, 3-Iod-2-propinyl-phenylcarbamat;
Phenole wie Tribromphenol, Tetrachlorphenol, 3-Methyl-4-chlorphenol, 3,5-Dimethyl-4-chlorphenol, Dichlorphen, 2-Benzyl-4-chlorphenol, Triclosan, Diclosan, Hexachlorophen, p-Hydroxybenzoesäuremethylester, p-Hydroxybenzoesäureethylester, p-Hydroxybenzoesäurepropylester, p-Hydroxybenzoesäurebutylester, p-Hydroxybenzoesäureoctylester ,o-Phenylphenol, m-Phenylphenol, p-Phenylphenol, 4-(2-tert.-Butyl-4-methyl-phenoxy)-phenol, 4-(2-Isopropyl-4-methyl-phenoxy)-phenol, 4-(2,4-Dimethyl-phenoxy)-phenol und deren Alkali- und Erdalkalimetallsalze;
Mikrobizide mit aktivierter Halogengruppe wie Bronidox, 2-Brom-2-nitro-1,3-propandiol, 2-Brom-4'-hydroxy-acetophenon, 1-Brom-3-chlor-4,4,5,5-tetramethyl-2-imidazoldinone, β-Brom-β-nitrostyrol, Chloracetamid, Chloramin T, 1,3-Dibrom-4,4,5,5-tetrametyl-2-imidazoldinone, Dichloramin T, 3,4-Dichlor-(3H)-1,2-dithiol-3-on, 2,2-Dibrom-3-nitril-propionamid, 1,2-Dibrom-2,4-dicyanobutan, Halane, Halazone, Mucochlorsäure, Phenyl-(2-chlor-cyan-vinyl)sulfon, Phenyl-(1,2-dichlor-2-cyanvinyl)sulfon, Trichlorisocyanur-säure;
Pyridine wie 1-Hydroxy-2-pyridinthion (und ihre Cu-, Na-, Fe-, Mn-, Zn-Salze), Tetrachlor-4-methylsulfonylpyridin, Pyrimethanol, Mepanipyrim, Dipyrithion, 1-Hydroxy-4-methyl-6-(2,4,4-trimethylpentyl)-2(1H)-pyridin;
Methoxyacrylate oder Ähnliche wie Azoxystrobin, Dimoxystrobin, Fluoxastrobin, Kresoxim-methyl, Metominostrobin, Orysastrobin, Picoxystrobin, Pyraclostrobin, Trifloxystrobin, 2,4-dihydro-5-methoxy-2-methyl-4-[2-[[[[1-[3-(trifluoromethyl)phenyl]-ethylidene]amino]oxy]methyl]phenyl]-3H-1,2,4-triazol-3-one (CAS-Nr. 185336-79-2);
Metallseifen wie Salze der Metalle Zinn, Kupfer und Zink mit höheren Fett-, Harz-, Naphthensäuren und Phosphorsäure wie z.B. Zinn-, Kupfer-, Zinknaphtenat, -octoat, 2-ethylhexanoat, -oleat, -phosphat, -benzoat;
Metallsalze wie Salze der Metalle Zinn, Kupfer, Zink, sowie auch Chromate und Dichromate wie z.B. Kupferhydroxycarbonat, Natriumdichromat, Kaliumdichromat, Kaliumchromat, Kupfersulfat, Kupferchlorid, Kupferborat, Zinkfluorosilikat, Kupferfluorosilikat;
Oxide wie: Oxide der Metalle Zinn, Kupfer und Zink wie z.B. Tributylzinnoxid, Cu₂O, CuO, ZnO;
Oxidationsmittel wie Wasserstoffperoxid, Peressigsäure, Kalium-persulfat;
Dithiocarbamate wie Cufraneb, Ferban, Kalium-N-hydroxymethyl-N'-methyl-dithiobarbamat, Na- oder K-dimethyldithiocarbamat, Macozeb, Maneb, Metam, Metiram, Thiram, Zineb, Ziram;
Nitrile wie 2,4,5,6-Tetrachlorisophthalodinitril, Dinatrium-cyano-dithioimidocarbamat;
Chinoline wie: 8-Hydroxychinolin und deren Cu-Salze;
sonstige Fungizide und Bakterizide wie Bethoxazin, 5-Hydroxy-2(5H)-furanon; 4,5-Benzdithiazolinon, 4,5-Trimethylendithiazolinon, N-(2-p-Chlorbenzoylethyl)-hexaminiumchlorid, 2-Oxo-2-(4-hydroxy-phenyl)acethydroximsäure-chlorid, Tris-N-(cyclohexyldiazeniumdioxy)-aluminium, N-(Cyclo-hexyldiazeniumdioxy)-tributylzinn bzw. K-Salze, Bis-N-(cyclohexyldiazeniumdioxy)-kupfer, Iprovalicarb, Fenhexamid, Spiroxamin, Carpropamid, Diflumetorin, Quinoxyfen, Famoxadone, Polyoxorim, Acibenzolar-S-methyl, Furametpyr, Thifluzamide, Methalaxyl-M, Benthiavalicarb, Metrafenon, Cyflufenamid, Tiadinil, Teebaumöl, Phenoxyethanol,
Ag, Zn oder Cu-haltige Zeolithe allein oder eingeschlossen in polymere Werkstoffe.

Ganz besonders bevorzugt handelt es sich bei den Fungiziden und Bakteriziden um:
Azaconazol, Bromuconazol, Cyproconazol, Dichlobutrazol, Diniconazol" Hexaconazol, Metaconazol, Penconazol, Propiconazol, Tebuconazol, Dichlofluanid, Tolylfluanid, Triadimefon, Fluorfolpet, Methfuroxam, Carboxin, Benzo[b]thiophen-S,S-dioxid-carbonsäurecyclohexylamid, Fenpiclonil, 4-(2,2-Difluoro-1,3-benzodioxol-4-yl)-1H-pyrrol-3-carbonitril, Butenafin, Imazalil, N-Methyl-isothiazolin-3-on, 5-Chlor-N-methylisothiazolin-3-on, Dichlor-N-octylisozhiazolinon, Mercaptobenzthiazol, Thiocyanatomethylthiobenzothiazol, Thiabendazol, Benzisothiazolinon, N-(2-Hydroxypropyl)-amino-methanol, Benzylalkohol-(hemi)-formal, N-Methylolchloracetamid, N-(2-Hydroxypropyl)-amin-methanol, Glutaraldehyd, Omadine, Zn-Omadine, Dimethyldicarbonat, 2-Brom-2-nitro-1,3-propandiol, Bethoxazin, o-Phthaldialdehyd, 2,2-Dibrom-3-nitril-propionamid, 1,2-Dibrom-2,4-dicyanobutan, 1,3-Bis(hydroxymethyl)-5,5-dimethylimidazolidine-2,4-dione (DMDMH), Tetramethylol-acetylen-diharnstoff (TMAD), Ethylenglycol-hemiformal, p-Hydroxybenzoesäure, Carbendazim, Chlorophen, 3-Methyl-4-chlorphenol, o-Phenylphenol.

Bei den Algiziden handelt es sich bevorzugt um:
Acetochlor, Acifluorfen, Aclonifen, Acrolein, Alachlor, Alloxydim, Ametryn, Amidosulfuron, Amitrole, Ammonium sulfamate, Anilofos, Asulam, Atrazine, Azafenidin, Aziptrotryn, Azimsulfuron,
Benazolin, Benfluralin, Benfuresat, Bensulfuron, Bensulfid, Bentazon, Benzofencap, Benzthiazuron, Bifenox, Bispyribac, Bispyribac-Natrium, Borax, Bromacil, Bromobutide, Bromofenoxim, Bromoxynil, Butachlor, Butamifos, Butralin, Butylat, Bialaphos, Benzoyl-prop, Bromobutide, Butroxydim,
Carbetamid, Carfentrazone-ethyl, Carfenstrol, Chlomethoxyfen, Chloramben, Chlorbromuron, Chlorflurenol, Chloridazon, Chlorimuron, Chlornitrofen, Chloressigsäure, Chloransulam-methyl, Cinidon-ethyl, Chlorotoluron, Chloroxuron, Chlorpropham, Chlorsulfuron, Chlorthal, Chlorthiamid, Cinmethylin, Cinofulsuron, Clefoxydim, Clethodim, Clomazone, Chlomeprop, Clopyralid, Cyanamide, Cyanazine, Cycloat, Cycloxydim, Chloroxynil, Clodinafop-propargyl, Cumyluron, Clometoxyfen, Cyhalofop, Cyhalofop-butyl, Clopyrasuluron, Cyclosulfamuron,
Diclosulam, Dichlorprop, Dichlorprop-P, Diclofop, Diethatyl, Difenoxuron, Difenzoquat, Diflufenican, Diflufenzopyr, Dimefuron, Dimepiperate, Dimethachlor, Dimethipin, Dinitramine, Dinoseb, Dinoseb Acetate, Dinoterb, Diphenamid, Dipropetryn, Diquat, Dithiopyr, Diduron, DNOC, DSMA, 2,4-D, Daimuron, Dalapon, Dazomet, 2,4-DB, Desmedipham, Desmetryn, Dicamba, Dichlobenil, Dimethamid, Dithiopyr, Dimethametryn,
Eglinazin, Endothal, EPTC, Esprocarb, Ethalfluralin, Ethidimuron, Ethofumesat, Ethobenzanid, Ethoxyfen, Ethametsulfuron, Ethoxysulfuron,
Fenoxaprop, Fenoxaprop-P, Fenuron, Flamprop, Flamprop-M, Flazasulfuron, Fluazifop, Fluazifop-P, Fuenachlor, Fluchloralin, Flufenacet Flumeturon, Fluorocglycofen, Fluoronitrofen, Flupropanate, Flurenol, Fluridone, Flurochloridone, Fluroxypyr, Fomesafen, Fosamine, Fosametine, Flamprop-isopropyl, Flamprop-isopropyl-L, Flufenpyr, Flumiclorac-pentyl, Flumipropyn, Flumioxzim, Flurtamon, Flumioxzim, Flupyrsulfuron-methyl, Fluthiacet-methyl,
Glyphosate, Glufosinate-ammonium
Haloxyfop, Hexazinon,
Imazamethabenz, Isoproturon, Isoxaben, Isoxapyrifop, Imazapyr, Imazaquin, Imazethapyr, Ioxynil, Isopropalin, Imazosulfuron, Imazomox, Isoxaflutole, Imazapic,
Ketospiradox,
Lactofen, Lenacil, Linuron,
MCPA, MCPA-hydrazid, MCPA-thioethyl, MCPB, Mecoprop, Mecoprop-P, Mefenacet, Mefluidid, Mesosulfuron, Metam, Metamifop, Metamitron, Metazachlor, Methabenzthiazuron, Methazol, Methoroptryne, Methyldymron, Methylisothiocyanat, Metobromuron, Metoxuron, Metribuzin, Metsulfuron, Molinat, Monalid, Monolinuron, MSMA, Metolachlor, Metosulam, Metobenzuron,
Naproanilid, Napropamid, Naptalam, Neburon, Nicosulfuron, Norflurazon, Natriumchlorat,
Oxadiazon, Oxyfluorfen, Oxysulfuron, Orbencarb, Oryzalin, Oxadiargyl,
Propyzamid, Prosulfocarb, Pyrazolate, Pyrazolsulfuron, Pyrazoxyfen, Pyribenzoxim, Pyributicarb, Pyridat, Paraquat, Pebulat, Pendimethalin, Pentachlorophenol, Pentoxazon, Pentanochlor, Petroleumöle, Phenmedipham, Picloram, Piperophos, Pretilachlor, Primisulfuron, Prodiamine, Profoxydim, Prometryn, Propachlor, Propanil, Propaquizafob, Propazine, Propham, Propisochlor, Pyriminobac-methyl, Pelargonsäure, Pyrithiobac, Pyraflufen-ethyl,
Quinmerac, Quinocloamine, Quizalofop, Quizalofop-P, Quinchlorac,
Rimsulfuron
Sethoxydim, Sifuron, Simazine, Simetryn, Sulfosulfuron, Sulfometuron, Sulfentrazone, Sulcotrione, Sulfosate,
Teeröle, TCA, TCA-Natrium, Tebutam, Tebuthiuron, Terbacil, Terbumeton, Terbutylazine, Terbutryn, Thiazafluoron, Thifensulfuron, Thiobencarb, Thiocarbazil, Tralkoxydim, Triallate, Triasulfuron, Tribenuron, Triclopyr, Tridiphane, Trietazine, Trifluralin, Tycor, Thdiazimin, Thiazopyr, Triflusulfuron,
Vernolat.

Ganz besonders bevorzugt handelt es sich bei den Algiziden um Triazinverbindungen, wie beispielsweise Terbutryn, Cybutryn, Propazin oder Terbuton, um Harnstoffverbindungen, wie beispielsweise Diuron, Benzthiazuron, Methabenzthiazuron, Tebuthiuron, und Isoproturon, oder um Uracile wie beispielsweise Terbacil.

Gegebenenfalls können die erfindungsgemäßen flüssigen Mittel zusätzlich Stabilisatoren aus der Klasse der Oxidationsinhibitoren, Radikalfänger und UV-Absorbern enthalten oder jeweils unabhängig voneinander nicht.

In einer bevorzugten Ausführungsform enthalten die erfindungsgemäßen flüssigen Mittel keine weiteren Fungizide, Bakterizide, Algizide und/oder Insektizide.

In einer weiteren bevorzugten Ausführungsform enthalten die erfindungsgemäßen flüssigen Mittel keine Epoxide.

In einer weiteren bevorzugten Ausführungsform enthalten die erfindungsgemäßen flüssigen Mittel keine Stabilisatoren aus der Gruppe der Ameisensäure, Formiatsalze oder Formiatester.

In einer besonders bevorzugten Ausführungsform enthalten die erfindungsgemäßen flüssigen Mittel 20 bis 35 Gew.-% IPBC, 10 bis 25 Gew.-% NOIT, 40 bis 48 Gew.-% Lösungsmittel und 1 bis 6 Gew.-% an Emulgatoren, wobei die Summe der vier vorgenannten Komponenten 90 bis 100 %, bevorzugt 95 bis 100 Gew.-% und besonders bevorzugt 98 bis 100 Gew.-% bezogen auf die Gesamtmasse der flüssigen Mittel beträgt.

In einer noch weiter bevorzugten Ausführungsform beinhalten die vorgenannten flüssigen Mittel keine weiteren Wirkstoffe, keine Epoxide und keine Stabilisatoren aus der Gruppe der Ameisensäure, Formiatsalze oder Formiatester.

Die erfindungsgemäßen flüssigen Mittel lassen sich beispielsweise in an sich bekannter Weise durch Vermischen der Einzelkomponenten herstellen.

Die Erfindung betrifft weiterhin die Verwendung der erfindungsgemäßen flüssigen Mittel zum Schutz von technischen Materialien. Als technische Materialien kommen insbesondere Klebstoffe, Leime, Papier, Karton, Leder, Holz, Holzwerkstoffe, Holz-Plastik-Verbundstoffe, Anstrichmittel, Beschichtungsmittel, Putze, Kühlschmiermittel und Wärmeüberleitungsflüssigkeiten in Frage. Ganz besonders bevorzugt sind Anstrichmittel, Beschichtungsstoffe, Putze, Holz und Holzwerkstoffe.

Die Erfindung betrifft außerdem ein Verfahren zum Schutz von technischen Materialien vor Befall und/oder Zerstörung durch Mikroorganismen, das dadurch gekennzeichnet ist, dass man die erfindungsgemäßen flüssigen Mittel unverdünnt oder verdünnt auf den Mikroorganismus oder dessen Lebensraum einwirken lässt.

Die Erfindung betrifft außerdem technische Materialien, erhältlich durch Behandlung von technischen Materialien mit den erfindungsgemäßen flüssigen Mitteln.

Im Falle von Farben und Beschichtungsmassen werden sowohl das noch flüssige, wie auch das getrocknete System gegen den Befall durch Mikroorganismen, besonders Pilzen und Algen geschützt.

Als Mikroorganismen, die einen Abbau oder eine Veränderung der technischen Materialien bewirken können, seien beispielsweise Bakterien, Pilze, Hefen, Algen und Schleimorganismen genannt. Vorzugsweise werden die erfindungsgemäßen flüssigen Mittel gegen Pilze, insbesondere Schimmelpilze, holzverfärbende und holzzerstörende Pilze (Basidiomyceten) sowie gegen Algen eingesetzt.

Es seien beispielsweise Mikroorganismen der folgenden Gattung genannt:
Alternaria, wie Alternaria tenuis, Aspergillus, wie Aspergillus niger, Chaetomium, wie Chaetomium globosum,Coniophora, wie Coniophora puetana, Lentinus, wie Lentinus tigrinus, Penicillium, wie Penicillium glaucum, Polyporus, wie Polyporus versicolor, Aureobasidium, wie Aureobasidium pullulans, Sclerophoma, wie Sclerophoma pityophila, Trichoderma, wie Trichoderma viride, Escherichia, wie Escherichia coli, Pseudomonas, wie Pseudomonas aeruginosa undStaphylococcus, wie Staphylococcus aureus.

Die Aufwandmenge der erfindungsgemäßen flüssigen Mittel richtet sich nach der Art und dem Vorkommen der zu bekämpfenden Mikroorganismen sowie nach der Zusammensetzung des zu schützenden Materials. Die optimale Einsatzmenge kann durch Testreihen einfach und in einer dem Fachmann hinlänglich bekannten Weise ermittelt werden. Im Allgemeinen werden 0,001 bis 5 Gew.-% des erfindungsgemäßen flüssigen Mittels, vorzugsweise von 0,01 bis 1,0 Gew.-%, bezogen auf das zu schützende Material, eingesetzt.

Der besondere Vorteil der erfindungsgemäßen flüssigen Mittel ist, dass sie auch bei erhöhten Temperaturen sehr gut lagerstabil sind und auch bei Temperaturen unter 0°C nicht auskristallisieren. Des Weiteren wurde gefunden, dass die Formulierungen sich bei der Lagerung nur gering verfärben und sich auch einfachste Weise in das zu schützende technische Material einarbeiten lassen. Weiterhin erlauben die erfindungsgemäßen Mittel die Formulierung unerwartet hoher Wirkstoffkonzentrationen von IPBC und NOIT.

### Beispiele

### Beispiel 1

Eine Lösung bestehend aus 6,7 g Rhodiasolv DIB (eine Mischung der Isobutyldiester von Glutar-, Succin- und Adipinsäure), 15,22 g Polyethylenglycol 300 und 2,50 g Antarox B 500 (Butylpolyoxypropylen-Polyoxyethylen Blockcopolymerisat, CAS Nr. 9038-95-3) wurde mit IPBC und NOIT (Gew.-Verhältnis 5:3) solange bei Raumtemperatur versetzt, bis sich nichts mehr löste. Die resultierende Lösung enthielt 34,51 g NOIT (29,5 % bez. auf Gesamtlösung) und 57,95 g (49,9 % bez. auf Gesamtlösung) IPBC. Innerhalb einer Woche bei Raumtemperatur wurden keine Ausfällungen beobachtet.

### Beispiel 2

Eine Lösung bestehend aus 15,22 g Polyethylenglycol 300 und 2,50 g Antarox B 500 wurde mit IPBC und NOIT (Gew.-Verhältnis 5:3) solange bei Raumtemperatur versetzt, bis sich nichts mehr löste. Die resultierende Lösung enthielt 25,9 g NOIT (29,7 % bez. auf Gesamtlösung) und 43,6 g (50,0 % bez. auf Gesamtlösung) IPBC. Innerhalb einer Woche bei Raumtemperatur wurden keine Ausfällungen beobachtet.

### Beispiel 3

15,22 g Polyethylenglycol 300 werden vorgelegt und mit IPBC und NOIT (Verhältnis 5:3) solange bei Raumtemperatur versetzt, bis sich nichts mehr löste. Die resultierende Lösung enthielt 25,8 g NOIT (29,7 % bez. auf Gesamtlösung) und 43,6 g (51,5 % bez. auf Gesamtlösung) IPBC. Innerhalb einer Woche bei Raumtemperatur wurden keine Ausfällungen beobachtet.

### Beispiele 4 bis 6

Die in der Tabelle angegebenen Lösungen wurden durch Vermischen hergestellt, 2 Wochen bei 54 °C gelagert und hiernach analytisch und optisch beurteilt.

| **- \ Beispiel Nr.** | **4** | **5** | **6** |
|---|---|---|---|
| IPBC | 32,16 | 32,16 | 32,16 |
| NOIT | 19,09 | 19,09 | 19,09 |
| Rhodiasolv DIB¹⁾ | 13,40 | - | 13,40 |
| Polyethylenglcol 300 | 30,43 | 43,83 | 30,43 |
| Antarox B 500 | 5,0 | 5,0 | 5,0 |
| Gehalt IPBC (nach 2 Wochen bei 55 °C) | 32,0 | 30,5 | 32,0 |
| Gehalt NOIT (nach 2 Wochen bei 55 °C) | 19,1 | 18,9 | 19,1 |
| Aussehen (nach 2 Wochen 54 °C) | Klare, hellgelbe Lösung | Klare, hellgelbe Lösung | Klare, hellgelbe Lösung |
| Aussehen (nach einer Woche bei - 4 °C) | Klare, farblose Lösung | Klare, farblose Lösung | Klare, farblose Lösung |

Alle Angaben der Komponenten in Gew.-%

### Beispiel 7 (zum Vergleich)

### Löslichkeit von IPBC in Rhodiasolv DIB und PEG 300

Das Lösungsmittel wurde bei Raumtemperatur vorgelegt und solange IPBC zugegeben bis ein Bodensatz bestehen blieb. Es wurde noch 12 h nachgerührt, der Feststoff ab-zentrifugiert und der verbleibende Überstand mittels HPLC analysiert. Hierbei wurde eine Löslichkeit von IPBC in Rhodiasolv DIB von 36,1 Gew.-% und in Polyethylenglycol 300 von 44,9 Gew.-% ermittelt.

## Patentansprüche

1. Flüssige Mittel, enthaltend zumindest
• 3-Iodpropargylbutylcarbamat (IPBC)
• n-Octylisothiazolinon (NOIT)
• ein Lösungsmittel das, bezogen auf Standarddruck einen Siedepunkt von 250°C oder mehr aufweist und zumindest zwei funktionelle Gruppen enthält, die ausgewählt sind aus Ether-, Ester- oder Amid- oder Alkoholgruppen,
wobei die flüssigen Mittel im Wesentlichen frei sind von Lösungsmitteln die, bezogen auf Standarddruck, einen Siedepunkt von weniger als 250°C aufweisen.

2. Flüssiges Mittel nach Anspruch 1, **dadurch gekennzeichnet, dass** die Summe der Wirkstoffgehalte von IPBC und NOIT 30 bis 80 Gew. % beträgt.

3. Flüssiges Mittel nach Anspruch 1 oder 2, **dadurch gekennzeichnet, dass** als Lösungsmittel das, bezogen auf Standarddruck einen Siedepunkt von 250°C oder mehr aufweist und zumindest zwei funktionelle Gruppen enthält, die ausgewählt sind aus Ether-, Ester- oder Amid- oder Alkoholgruppen Polyethylenglycole, Dialkyladipate, Dialkylsuccinate und Dialkylglutarate sowie Mischungen der vorgenannten Lösungsmittel verwendet werden.

4. Flüssiges Mittel nach einem der Ansprüche 1 bis 3, **dadurch gekennzeichnet, dass** der Gehalt an Lösungsmittel, das, bezogen auf Standarddruck einen Siedepunkt von 250°C oder mehr aufweist und zumindest zwei funktionelle Gruppen enthält, die ausgewählt sind aus Ether-, Ester- oder Amid- oder Alkoholgruppen 40 bis 48 Gew. % beträgt.

5. Flüssiges Mittel nach einem der Ansprüche 1 bis 4, **dadurch gekennzeichnet, dass** es weiterhin zumindest einen Emulgator enthält.

6. Flüssiges Mittel nach Anspruche 5, **dadurch gekennzeichnet, dass** der Gehalt an zumindest einem Emulgator 0,001 bis 10 Gew. % beträgt.

7. Flüssiges Mittel nach einem der Ansprüche 1 bis 6, **dadurch gekennzeichnet, dass** es keine weiteren Wirkstoffe enthält.

8. Flüssiges Mittel nach einem der Ansprüche 1 bis 7, **dadurch gekennzeichnet, dass** es keine Epoxide und keine Stabilisatoren aus der Gruppe der Ameisensäure, Formiatsalze oder Formiatester enthält.

9. Flüssiges Mittel nach einem der Ansprüche 1 bis 8, **dadurch gekennzeichnet, dass** es 20 bis 35 Gew.-% IPBC, 10 bis 25 Gew.-% NOIT, 40 bis 48 Gew.-% Lösungsmittel und 1 bis 6 Gew.-% an Emulgatoren enthält, wobei die Summe der vier vorgenannten Komponenten 90 bis 100 % bezogen auf die Gesamtmasse der flüssigen Mittel beträgt.

10. Verwendung von flüssigen Mitteln gemäß einem der Ansprüche 1 bis 9 zum Schutz von technischen Materialien.

11. Verwendung nach Anspruch 10, **dadurch gekennzeichnet, dass** technische Materialien Klebstoffe, Leime, Papier, Karton, Leder, Holz, Holzwerkstoffe, Holz-Plastik-Verbundstoffe, Anstrichmittel, Beschichtungsmittel, Putze, Kühlschmiermittel und Wärmeüberleitungsflüssigkeiten sind.

12. Technisches Material, erhältlich durch Behandlung von technischen Materialien mit einem flüssigen Mittel nach einem der Ansprüche 1 bis 9.

13. Verfahren zum Schutz von technischen Materialien vor Befall und/oder Zerstörung durch Mikroorganismen, **dadurch gekennzeichnet, dass** man die erfindungsgemäßen flüssigen Mittel unverdünnt oder verdünnt auf den Mikroorganismus oder dessen Lebensraum einwirken lässt.

14. Verwendung von NOIT, IPBC und Lösungsmitteln die, bezogen auf Standarddruck einen Siedepunkt von 250°C oder mehr aufweisen und zumindest zwei funktionelle Gruppen enthalten, die ausgewählt sind aus Ether-, Ester- oder Amid- oder Alkoholgruppen zur Herstellung von flüssigen Mitteln gemäß einem der Ansprüche 1 bis 9.

15. Verwendung von Emulgatoren zur Herstellung von flüssigen Mitteln gemäß einem der Ansprüche 5 bis 9.
